# EUROPEAN PATENT SPECIFICATION

(11) **EP 2 879 826 B1**
(45) Date of publication and mention of the grant of the patent: **03.10.2018**
(21) Application number: 13824748.1
(22) Date of filing: 02.08.2013
(51) Int. Cl.: B23B 45/04, B25F 5/00, F01C 13/02, F01C 20/08, F01C 21/18

(54) **VARIABLE SPEED CONTROL OF FLUID DRIVEN MOTORS**
STEUERUNG FLUIDBETÄTIGTER MOTOREN MIT VARIABLER GESCHWINDIGKEIT
COMMANDE DE VITESSE VARIABLE DE MOTEURS ENTRAÎNÉS PAR UN FLUIDE

(30) Priority: 02.08.2012 US 201261679038 P
(43) Date of publication of application: 10.06.2015
(73) Proprietor: Ingersoll-Rand Company, Davidson, NC 28036 (US)
(72) Inventor: KUMAR, Sanjeev, Bangalore Karnataka 560072 (IN)
(74) Representative: Haseltine Lake LLP
(86) International application number: PCT/US2013/053494
(87) International publication number: WO 2014/022812

(56) References cited:
- US-A- 2 995 114
- US-A- 4 024 892
- US-A- 4 476 942
- US-A- 5 797 462
- US-A1- 2006 278 416
- US-A1- 2007 011 884
- US-A1- 2010 300 716
- US-A1- 2012 055 690

## Description

### CROSS REFERENCE TO RELATED APPLICATIONS

The present application claims the benefit of U.S. Provisional Patent Application No. 61/679,038, filed August 2, 2012.

### FIELD OF THE INVENTION

The present invention generally relates to fluid driven motors, and more particularly, but not exclusively, to variable motor speed control of fluid driven machinery, including fluid driven tools.

### BACKGROUND OF THE INVENTION

Speed control of fluid powered motors, specifically in the area of fluid driven machinery remains an area of interest. Many current designs provide maximum flow to the motor; and therefore, maximum motor speed immediately after a flow of fluid from an inlet valve is initiated. Therefore, further technological developments are desirable in this area.

Document US 2006/278416 A1 discloses an air tool which can be connected to a high pressure air compressing apparatus supplying high pressure air. The air tool comprises a pressure reducing valve mechanism for reducing a pressure of high pressure compressed air. The air tool further comprises a trigger valve mechanism for communicating or cutting an air path between a secondary pressure side port of the pressure reducing valve mechanism and an air supply port for an air motor mechanism.

### BRIEF SUMMARY OF THE INVENTION

One embodiment of the present invention is a unique speed control device providing variable speed motor control for fluid driven motors. Other embodiments include apparatuses, systems, devices, hardware, methods, and combinations for motor speed control for fluid powered machinery. Further embodiments, forms, features, aspects, benefits, and advantages of the present application shall become apparent from the description and figures provided herewith.

### BRIEF DESCRIPTION OF THE SEVERAL VIEWS OF THE DRAWINGS

The description herein makes reference to the accompanying figures wherein like reference numerals refer to like parts throughout the several views, and wherein:
FIG. 1 depicts an embodiment of a fluid driven machine including a variable valve assembly.
FIGS. 2A-2B depict an embodiment of a plunger including a plurality of axially disposed fluid channels.
FIG. 3 depicts an embodiment of a plunger assembly.
FIG. 4 depicts an embodiment of a variable valve assembly including multiple plungers.
FIGS. 5A-5C depict embodiments of the variable valve assembly in various modes of operation.

### DETAILED DESCRIPTION OF THE INVENTION

For purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

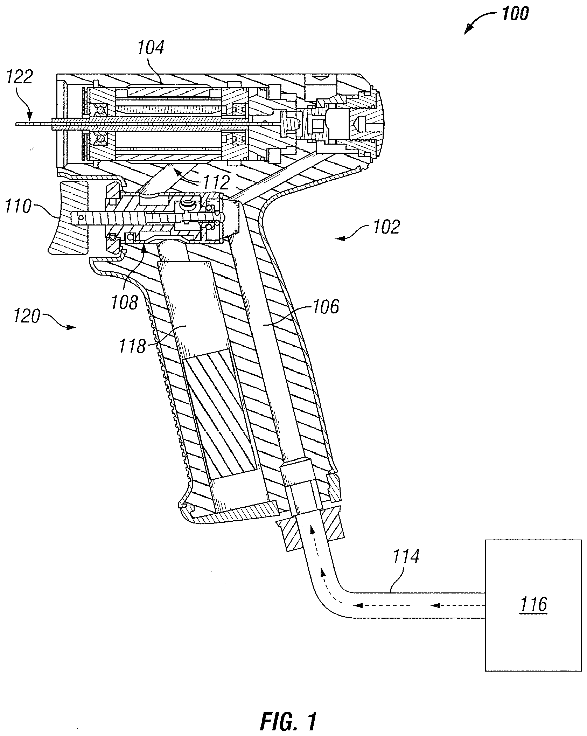

With reference to Fig. 1, one embodiment is disclosed of a fluid powered machine 100 including a housing 102 and a fluid driven motor 104. It is contemplated that the fluid powered device 100 can include a variety of fluid powered devices such as pumps, presses, hoists, grain elevators, or any other fluid powered device 100. In some embodiments, the fluid powered device 100 can be a power tool including, but not limited to a drill, ratchet, chisel, grinder, or the like. In one form, the fluid powered device 100 is a handheld pneumatic tool which includes a hand grip 120.

The motive fluid 114 can be any fluid capable powering the fluid driven motor 104. The motive fluid 114 can be a compressible gas. Air 114 can be utilized as the motive fluid 114, which is received from a pressure source 116. The pressure source 116 can include various compressors, pistons, pressurized tanks, or any other device which is capable of exerting or retaining pressure on the motive fluid 114. In one form, the pressure source 116 is an oil free screw air compressor.

The fluid driven motor 104 can be any device which is capable of extracting energy from the motive fluid 114 and being driven thereby. The fluid driven motor 104 can be a piston, turbine, rotor, screw drive, or any other such device. The fluid driven motor 104 can be a turbine which converts the potential energy stored in the pressurized air 114 into rotational motion to be harnessed at a motor shaft output 122.

A fluid inlet 106 allows the motive fluid 114 to flow into a valve assembly 108. The fluid inlet 106 may include various flanges, fittings, etc., on an end opposite the valve assembly 108, to provide ease of coupling with respect to the pressure source 116. In some forms, the housing 102 can include a pressure chamber 118 to store a portion of motive fluid 114 to ensure consistent flow to the valve assembly 108.

The valve assembly 108 is operated by an actuator 110. The actuator 110 can take a variety of forms including, but not limited to, electronic or manual actuators such as linear actuators, hydraulic actuators, motor driven actuators, solenoids, or the like. The actuator 110 can receive an input from a location near the actuator, such as is illustrated in Fig. 1, or can receive an input signal from a distant location such as a push button (not shown) for use with a pneumatic hoist, as one non-limiting example. The actuator 110 can be a trigger 110 which provides a mechanical force to the valve assembly 108.

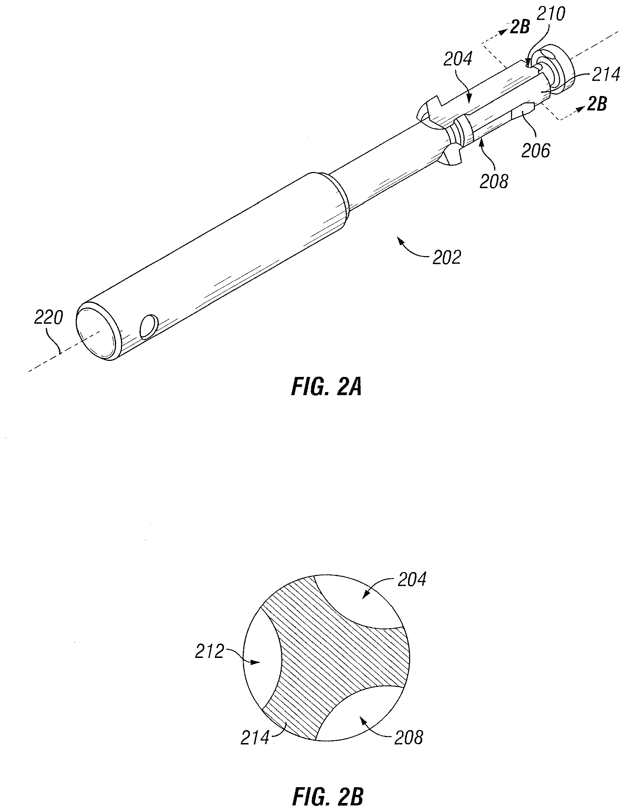

The valve assembly 108 permits the selective release of the motive fluid 114 from the fluid inlet 106 to an inlet 112 of the fluid driven motor 104. Referring to Figs. 2A and 2B, the valve assembly 108 includes at least one plunger 202. The plunger 202 includes a plurality of axially extending fluid channels 204, 208, 212 located in a plunger body 214. The axially extending fluid channels 204, 208, 212 can be grooves in the plunger body 214, apertures extending within the plunger body 214 and having an intake 206, 210, or can be any other passageway which permits the flow of fluid from an intake 206, 210 of the axially extending fluid channel 204 to an exit of the axially extending fluid channel 204, wherein the exit is in flow communication with the fluid driven motor 104.

Each of the plurality of axially extending fluid channels 204, 208, 212 includes a fluid intake 206, 210, 306. The fluid intakes 206, 210, 306 are disposed axially in relation to each of the other fluid intakes 206, 210, 306. An axis 220 is a reference axis for use in describing axial relationships as well as movement along an axis; however, the axial relationships and axial movements are not meant to be limited by axis 220. In some forms, the fluid intakes 206, 210, 306 and corresponding axially extending channels 204, 208, 212 can be disposed circumferentially with relation to each other as is illustrated in Fig. 2B.

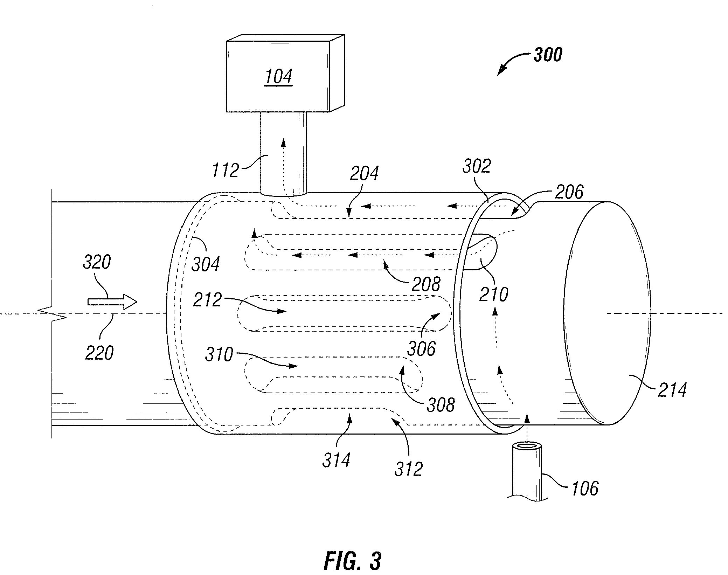

Referring to Fig. 3, any number of axially extending fluid channels can be incorporated into the plunger body 214 depending upon the specific application, manufacturing capabilities, and any cost to benefit analysis associated therewith. As will be explained below, the number of axially extending fluid channels can determine the number of speeds at which the fluid driven motor 104 can operate. Fig. 3 illustrates a plunger assembly 300 including five axially extending channels 204, 208, 212, 310, 314 and corresponding intakes 206, 210, 306, 308, 312. In this non-limiting embodiment, the plunger body 214 is capable of providing five different fluid flows to the fluid driven motor 104; therefore, driving the fluid driven motor 104 at five different speeds. The plunger assembly 300 includes a plurality of sealing members 302 and 304 meant to segregate the inlet 106 from the inlet 112 of the fluid driven motor 104. The sealing members 302 and 304 can be O-rings, gaskets, or any other devices capable of performing a sealing or semi-sealing function, depending on the specific application. In some forms, the sealing members 302 and/or 304 can be incorporated into various wall members or other housing structures of the valve assembly 108, can be incorporated into one or more plungers, or the one or more plungers can themselves form the sealing members 302 and/or 304.

As the plunger body 214 is displaced linearly by the actuator 110, along the axis 202 in the direction illustrated at 320, the first intake 206 of the axially extending channel 204 is placed in fluid communication with the fluid inlet 106. As the plunger body 214 is displaced further in the direction illustrated by 320, the second intake 210 is placed in fluid communication with the fluid inlet 106. The motive fluid 114 can pass from the fluid inlet 106 through the fluid intakes 206 and 210, traversing the axially extending fluid channels 204, 208, and enter the fluid driven motor 104 through the inlet 112 of the fluid driven motor 104. As illustrated, the remainder of the intakes 306, 308, and 314 have not been placed in fluid communication with the fluid inlet 106 as the sealing member 302 prevents the motive fluid 114 from entering therein. Therefore, in this illustration, the motor 204 is only receiving motive fluid 114 from two of a potential five channels.

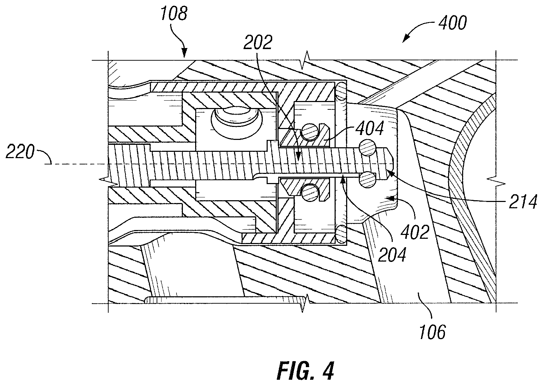

The valve assembly 108 can include more than one plunger. Fig. 4 illustrates a cut away view 400 of the valve assembly 108 including a second plunger 404. In some forms, the second plunger 404 can be located around the first plunger 202. Upon full displacement of the first plunger 202, the second plunger 404 can be displaced, providing a maximum motive fluid 114 flow. The second plunger 404 can additionally or alternatively contain a plurality of axially extending fluid channels through which the motive fluid 114 traverses upon the linear displacement of the second plunger 404, as was discussed with reference to the first plunger 202. In providing the second plunger 404 with a plurality of axially extending fluid channels, the number of total fluid driven motor 104 speeds can be increased.

Additionally, Fig. 4 illustrates that a portion of the fluid inlet 106 and an inlet 402 of the valve assembly 108 can be disposed in a perpendicular or approximately perpendicular relationship. However, any configuration with relation to fluid inlet 106 and inlet 402 can be utilized depending upon the specific application and flow desired.

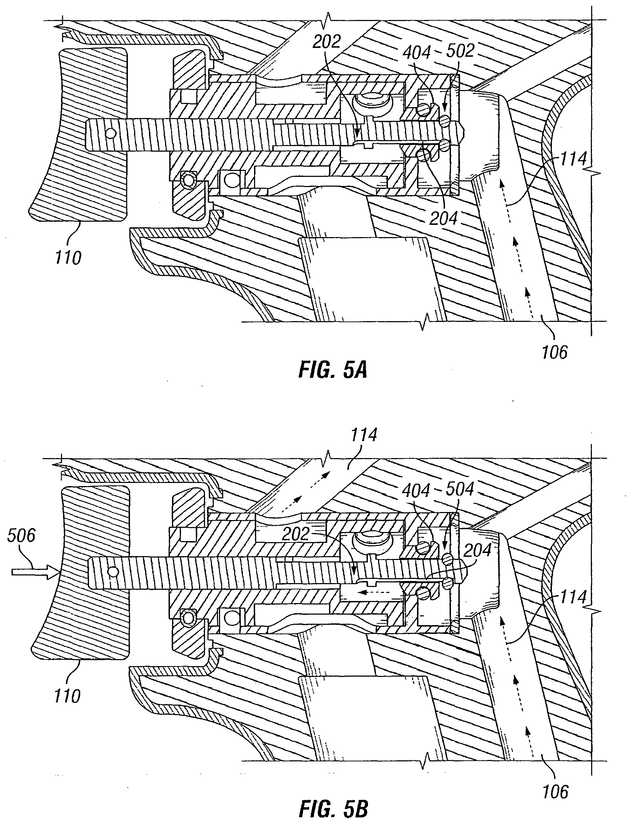

Referring now to FIGS. 5A-5C, various illustrative modes of valve assembly 108 operation will be discussed. Referring to Fig. 5A, the trigger 110 is not depressed and the plunger 202 is located at a first position 502. The plungers 202 and 404, acting as sealing member 302, block the fluid intake 204, and other fluid intakes (not shown), and effectively prevent the release of motive fluid 114 to the fluid driven motor 104 such that the fluid driven motor 104 is not powered.

Referring to Fig. 5B, a manual force 506 is exerted on the trigger such that the first plunger 202 is moved from the first position 502 to a second position 504 wherein the motive fluid 114, received from the fluid inlet 106, enters a first axially extending fluid channel 204, and the motive fluid 114 is directed to the fluid driven motor 104. As the trigger 110 continues to be depressed, the plunger 202 is directed to a third position where a second axially extending fluid channel 208 is also placed in flow communication with the fluid inlet 106. In this second position 504, the motive fluid 114 received from the fluid inlet 106 traverses both the first and second axially extending fluid channels 204, 208 and is directed toward the fluid driven motor 104. As the trigger 110 is depressed further, a third through n^{th} position can be reached, wherein n is the total number of channels disposed in the plunger body 214.

As each position is reached, the axially extending fluid channel corresponding to the respective position is placed in flow communication with the fluid inlet 106, and the motive fluid 114 traverses the respective axially extending fluid channel and is directed toward the fluid driven motor 104. The total motive fluid 114 flow directed toward the fluid driven motor 104 is the combined total of the motive fluid 114 flows through each of the axially extending fluid channels 204, 208, n^{th} which are in flow communication with the fluid inlet 106. Therefore, the greater the number of axially extending fluid channels, the greater the number of speeds at which the fluid driven motor 104 can potentially be operated.

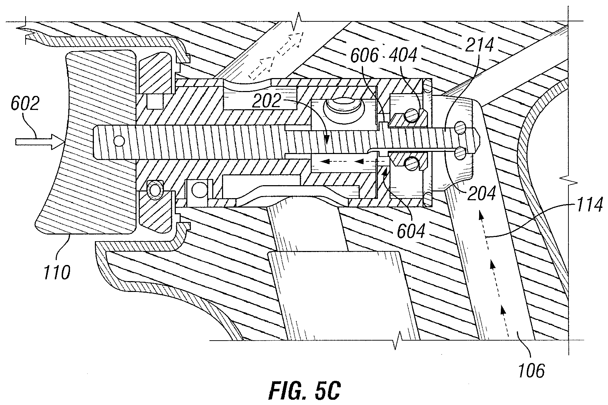

Referring to Fig. 5C, the second plunger 404 can be axially displaced by the actuator 110. When the motive fluid 114 is traversing all of the axially extending fluid channels in the first plunger 202, continued depression 602 of the trigger 110 can result in linear movement of the second plunger 404 to an open position 604. In various forms, the second plunger 404 can be displaced directly by the actuator 110, or via relative motion of the first plunger 202 relative the second plunger 404. For example, the second plunger 404 can be displaced by a protrusion 606 extending from the first plunger. The linear movement of the second plunger 404 can result in a fully open position of the valve assembly 108, thereby permitting a maximum flow of the motive fluid 114 to the fluid driven motor 104. As was aforementioned, the second plunger 404 can additionally have a plurality of axially extending channels, wherein displacement of the second plunger to a first through n^{th} position places a first through n^{th} axially extending channel in flow communication with the fluid inlet 106, as was previously discussed with reference to the first plunger 202.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the scope of the appended claims, which scope is to be accorded the broadest interpretation so as to encompass all such modifications and equivalent structures as permitted under the law.

## Claims

1. A system, comprising:
a fluid inlet (106) connectable to a pressure source (116) for supplying a motive fluid (114);
a fluid driven motor (104) structured to be driven in a drive direction at variable speeds through action of the motive fluid (114), the fluid driven motor (104) having an inlet (112) for receiving the motive fluid (114); and
a valve assembly (108) which permits the selective release of the motive fluid (114) from the fluid inlet (106) to the inlet (112) of the fluid driven motor (104), **characterized in that** the valve assembly (108) includes a plurality of seal members (302, 304) to segregate the fluid inlet (106) from the inlet (112) of the fluid driven motor (104) and a plurality of fluid channels (204, 208, 212, 310, 314) selectively uncovered through movement of a first plunger (202) such that the motive fluid (114) is permitted to flow past one of the seal members (302, 304) to the fluid driven motor (104), the first plunger (202) being movable to a range of positions (502, 504) to selectively expose one or more of the plurality of fluid channels (204, 208, 212, 310, 314) to carry the motive fluid (114) and provide a variable flow rate of the motive fluid (114) through the valve assembly (108) as a consequence of uncovering the fluid channels (204, 208, 212, 310, 314), the variable flow rate of the motive fluid (114) providing a variable speed output of the fluid driven motor (104).

2. The system of claim 1, wherein the first plunger (202) is a first slidable plunger, and which further includes an actuator (110) structured to selectively displace the first slidable plunger (202) from a first position (502) to a second position (504).

3. The system of claim 2, wherein the first plunger (202) includes a formation forming the plurality of fluid channels (204, 208, 212, 310, 314).

4. The system of claim 2, which further includes a second plunger (404) selectively displaced by the actuator (110), the second plunger (404) structured to permit a flow of motive fluid (114) to the fluid driven motor (104) in addition to a flow of motive fluid (114) provided by the first slidable plunger (202).

5. The system of claim 4, wherein a fluid flow received by the fluid driven motor (104) from the displacement of the second plunger (404) exceeds a fluid flow received by the fluid driven motor (104) from a maximum displacement of the first plunger (202), or wherein the plurality of fluid channels (204, 208, 212, 310, 314) are axially extending fluid channels (204, 208, 212, 310, 314), and wherein each of the plurality of axially extending fluid channels (204, 208, 212, 310, 314) being axially staggered relative to a neighboring fluid channel (204, 208, 212, 310, 314) such that the staggered relationship provides selective exposure of the fluid channels (204, 208, 212, 310, 314) as the first slidable plunger (202) is slid between a first position (502) and a second position (504).

6. The system of claim 5, wherein the plurality of fluid channels includes at least three axially extending fluid channels (204, 208, 212, 310, 314).

7. The system of claim 2, further including a housing (102) which defines at least a portion of an air driven power tool (100), wherein the housing (102) includes the fluid driven motor (104) and the valve assembly (108), and wherein an actuator (110) used to alter a position (502, 504) of the first plunger (202) is a trigger.

8. The system of claim 1, which further includes a second plunger (404) structured to provide a flow passage area for flow of the motive fluid (114) in addition to a flow provided by the first plunger (202), the second plunger (404) actuated by movement of the first plunger (202).

9. The system of claim 1, wherein the valve assembly (108) is structured to be in fluid communication with a source of fluid pressurization (116), and wherein the source of fluid pressurization (116) is an air compressor.

10. A method, comprising:
providing a motive fluid (114) from a fluid inlet (106) connected to a pressure source (116) to a fluid driven motor (104) through a variable speed valve assembly (108), the variable speed valve assembly (108) permitting the selective release of the motive fluid from the fluid inlet (106) to an inlet (112) of the fluid driven motor (104), the variable speed valve assembly (108) having a plurality of seal members (302, 304) to segregate the fluid inlet (106) from the inlet (112) of the fluid driven motor (104) and a plurality of staggered flow channels (204, 208, 212, 310, 314) selectively uncovered through movement of a movable first plunger (202), the interaction of the plurality of seal members (302, 304) and the movable first plunger (202) forming closed positions of the plurality of staggered flow channels (204, 208, 212, 310, 314) and operationally open positions of the plurality of staggered flow channels (204, 208, 212, 310, 314), the providing including:
displacing the first plunger (202) to a first operationally open position to expose a first one of the plurality of staggered flow channels (204, 208, 212, 310, 314) so as to allow motive fluid (114) to flow past one of the seal members (302, 304) and traverse the first one of the plurality of staggered flow channels (204, 208, 212, 310, 314);
flowing the motive fluid (114) through the first one of the plurality of staggered flow channels (204, 208, 212, 310, 314) to provide the motive fluid (114) to a fluid driven motor (104) thereby driving the motor (104) at a first speed;
displacing the first plunger (202) to a second operationally open position to expose a second one of the plurality of staggered flow channels (204, 208, 212, 310, 314) so as to allow motive fluid (114) to flow past the one of the seal members (302, 304) and traverse the first one of the plurality of staggered flow channels and the second one of the plurality of staggered flow channels; and
flowing the motive fluid (114) through the first one of the plurality of staggered flow channels (204, 208, 212, 310, 314) and the second one of the plurality of staggered flow channels (204, 208, 212, 310, 314) to provide the motive fluid (114) to the fluid driven motor (104) thereby driving the motor (104) at a second speed greater than the first speed.

11. The method of claim 10, further comprising displacing the first plunger (202) to a plurality of operational positions, each operational position corresponding to a position at which another of the staggered flow channels (204, 208, 212, 310, 314) allows motive fluid (114) to flow to the fluid driven motor (104), wherein as the number of staggered flow channels (204, 208, 212, 310, 314) that motive fluid (114) traverses is increased, a speed of the motor (104) also increases, or which further includes turning a flow of motive fluid (114) within a housing (102) of a tool (100) that includes the fluid driven motor (104) from a first inlet direction to a second direction for use in the valve assembly (108), the first inlet direction approximately perpendicular to the second direction.

12. The method of claim 11, which further includes displacing the first plunger (202) to an operational position such that all of the plurality of staggered flow channels (204, 208, 212, 310, 314) are utilized to flow motive fluid (114), and displacing a second plunger (404) to an operational position to augment the flow of motive fluid (114) through the plurality of staggered flow channels (204, 208, 212, 310, 314), wherein upon displacing the second plunger (404) the speed of the motor (104) is increased.

## Patentansprüche

1. System, umfassend:
eine Einlassöffnung für ein fließendes Medium (106), die mit einer Druckquelle (116) verbunden werden kann, um ein Treibmedium (114) zuzuführen;
einen hydraulisch angetriebenen Motor (104), der so konstruiert wurde, dass er durch die Wirkung des Treibmediums (114) in einer Antriebsrichtung mit variablen Geschwindigkeiten angetrieben wird, wobei der hydraulisch angetriebene Motor (104) eine Einlassöffnung (112) zur Aufnahme des Treibmediums (114) aufweist; und
eine Ventilbaugruppe (108), die von der Einlassöffnung für das fließende Medium (106) bis zur Einlassöffnung (112) die selektive Freigabe des Treibmediums (114) des hydraulisch angetriebenen Motors ermöglicht und **dadurch gekennzeichnet ist, dass** die Ventilbaugruppe (108) eine Vielzahl von Dichtungselementen (302, 304) aufweist, um die Einlassöffnung für das fließende Medium (106) selektiv von der Einlassöffnung (112) des hydraulisch angetriebenen Motors (104) zu trennen und eine Vielzahl von Fluidkanälen (204, 208, 212, 310, 314), die durch die Bewegung eines ersten Kolbens (202) derart freigelegt werden, dass das Treibmedium (114) an einem der Dichtungselemente (302, 304) vorbei in den hydraulisch angetriebenen Motor (104) strömen kann, wobei der erste Kolben (202) in verschiedene Positionen (502, 504) bewegt werden kann, um selektiv einen oder mehrere der vielen Fluidkanäle (204, 208, 212, 310, 314) zur Beförderung des Treibmediums (114) freizulegen und als Folge der Freigabe der Fluidkanäle (204, 208, 212, 310, 314) das Treibmedium (114) mit variabler Durchflussmenge durch die Ventilbaugruppe (108) zu befördern, wobei die variable Durchflussmenge des Treibmediums (114) beim hydraulisch angetriebenen Motor (104) eine variable Geschwindigkeit erzeugt.

2. System gemäß Anspruch 1, wobei der erste Kolben (202) ein erster verschiebbarer Kolben ist, der ferner einen so konstruierten Stellantrieb (110) aufweist, dass er den ersten verschiebbaren Kolben (202) von einer ersten Position (502) in eine zweite Position (504) verschieben kann.

3. System gemäß Anspruch 2, wobei der erste Kolben (202) ein Gebilde aufweist, das eine Vielzahl von Fluidkanälen (204, 208, 212, 310, 314) bildet.

4. System gemäß Anspruch 2, ferner umfassend einen zweiten Kolben (404), der durch den Stellantrieb (110) selektiv verschoben werden kann, wobei der zweite Kolben (404) so konstruiert ist, dass neben dem durch den ersten verschiebbaren Kolben (202) bereitgestellten Treibmedium (114) zusätzliches Treibmedium (114) zum hydraulisch angetriebenen Motor (104) fließen kann.

5. System gemäß Anspruch 4, wobei die vom hydraulisch angetriebenen Motor (104) aufgrund der Verlagerung des zweiten Kolbens (404) aufgenommene Fluidströmung die Fluidströmung überschreitet, die vom hydraulisch angetriebenen Motor (104) aufgrund der Verlagerung des ersten Kolbens (202) aufgenommen wird oder wobei die Vielzahl der Fluidkanäle (204, 208, 212, 310, 314) sich axial erstreckende Fluidkanäle (204, 208, 212, 310, 314) sind und wobei jeder der Vielzahl der sich axial erstreckenden Fluidkanäle (204, 208, 212, 310, 314) gegenüber dem benachbarten Fluidkanal (204, 208, 212, 310, 314) axial so versetzt angeordnet ist, dass die versetzte Anordnung die selektive Freilegung der Fluidkanäle (204, 208, 212, 310, 314) ermöglicht, wenn der erste verschiebbare Kolben (202) zwischen einer ersten Position (502) und einer zweiten Position (504) verschoben wird.

6. System gemäß Anspruch 5, wobei die Vielzahl von Fluidkanälen mindestens drei sich axial erstreckende Fluidkanäle (204, 208, 212, 310, 314) umfasst.

7. System gemäß Anspruch 2, ferner umfassend ein Gehäuse (102), das mindestens einen Teil eines mit Druckluft angetriebenen Werkzeugs (100) definiert, wobei das Gehäuse (102) den hydraulisch angetriebenen Motor (104) und die Ventilbaugruppe (108) umfasst und wobei der zur Positionsänderung (502, 504) des ersten Kolbens (202) verwendete Stellantrieb (110) ein Auslöser ist.

8. System gemäß Anspruch 1, ferner umfassend einen so konstruierten zweiten Kolben (404), dass er zusätzlich zu der durch den ersten Kolben (202) erzeugten Strömung einen Strömungsdurchgangsbereich für das Treibmedium (114) bereitstellt, wobei der zweite Kolben (404) durch die Bewegung des ersten Kolbens (202) betätigt wird.

9. System gemäß Anspruch 1, wobei die Ventilbaugruppe (108) so konstruiert ist, dass sie strömungstechnisch mit einer Fluiddruckbeaufschlagungsquelle (116) verbunden ist und wobei die Fluiddruckbeaufschlagungsquelle (116) ein Luftkompressor ist.

10. Verfahren, umfassend:
einem hydraulisch angetriebenen Motor (104) über eine Ventilbaugruppe mit variabler Geschwindigkeit (108) durch eine mit einer Druckquelle (116) verbundene Einlassöffnung für ein fließendes Medium (106) ein Treibmedium (114) zuführen, wobei die Ventilbaugruppe mit variabler Geschwindigkeit (108) das Treibmedium von der Einlassöffnung für das fließende Medium (106) bis zur Einlassöffnung (112) des hydraulisch angetriebenen Motors (104) selektiv freisetzen kann, wobei die Ventilbaugruppe mit variabler Geschwindigkeit (108) eine Vielzahl von Dichtungselementen (302, 304) aufweist, um die Einlassöffnung für das fließende Medium (106) von der Einlassöffnung (112) des hydraulisch angetriebenen Motors (104) zu trennen und eine Vielzahl von versetzten Strömungskanälen (204, 208, 212, 310, 314), durch die Bewegung des beweglichen ersten Kolbens (202) selektiv freizulegen, wobei das Zusammenwirken der Vielzahl von Dichtungselementen (302, 304) mit dem beweglichen ersten Kolben (202) die geschlossenen Positionen der vielen versetzten Strömungskanäle (204, 208, 212, 310, 314) und die betriebsmäßig geöffnete Positionen der Vielzahl von versetzten Strömungskanälen (204, 208, 212, 310, 314) bilden, wobei dieser Vorgang umfasst:
den ersten Kolben (202) in eine erste betriebsmäßig geöffnete Position bewegen, um den ersten der Vielzahl von versetzten Strömungskanälen (204, 208, 212, 310, 314) freizulegen, damit das Treibmedium (114) an einem Dichtungselemente (302, 304) vorbeiströmen und den ersten der Vielzahl von versetzten Strömungskanälen (204, 208, 212, 310, 314) durchfließen kann;
das Treibmedium (114) durch den ersten der Vielzahl von versetzten Strömungskanälen (204, 208, 212, 310, 314) fließen lassen, damit das Treibmedium (114) einem hydraulisch angetriebenen Motor (104) zugeführt und der Motor (104) mit einer ersten Geschwindigkeit angetrieben werden kann;
den zweiten Kolben (202) in eine zweite betriebsmäßig geöffnete Position bewegen, um den ersten der Vielzahl von versetzten Strömungskanälen (204, 208, 212, 310, 314) freizulegen, damit das Treibmedium (114) an dem einen der Dichtungselemente (302, 304) vorbeiströmen und den ersten der Vielzahl von versetzten Strömungskanälen und den zweiten der Vielzahl von versetzten Strömungskanälen durchfließen kann;
das Treibmedium (114) durch den ersten der Vielzahl von versetzten Strömungskanälen (204, 208, 212, 310, 314) und den zweiten der Vielzahl von versetzten Strömungskanälen (204, 208, 212, 310, 314) fließen lassen, damit das Treibmedium (114) einem hydraulisch angetriebenen Motor (104) zugeführt und der Motor (104) mit einer zweiten und schnelleren als der ersten Geschwindigkeit angetrieben werden kann;

11. Verfahren gemäß Anspruch 10, ferner umfassend den ersten Kolben (202) in eine Vielzahl von Betriebspositionen versetzen, wobei jede Betriebsposition einer Position entspricht, an der ein anderer versetzter Strömungskanal (204, 208, 212, 310, 314) Treibmedium (114) in den hydraulisch angetriebenen Motor (104) strömen lässt, wobei sich die Drehzahl des Motors (104) erhöht, wenn sich die Anzahl der versetzten Strömungskanäle (204, 208, 212, 310, 314) erhöht, durch die das Treibmedium (114) fließen kann oder ferner umfasst, die Treibmediumströmung (114) im Gehäuse (102) eines Werkzeugs (100) mit einem hydraulisch angetriebenen Motor (104) von einer ersten Einlassrichtung in der Ventilbaugruppe (108) in eine zweite Richtung zu wechseln, wobei die erste Einlassrichtung ungefähr senkrecht zur zweiten Richtung verläuft.

12. Verfahren gemäß Anspruch 11, ferner umfassend den ersten Kolben (202) in eine Betriebsposition verlagern, damit alle der Vielzahl von versetzten Strömungskanälen (204, 208, 212, 310, 314) Treibmedium (114) befördern können und einen zweiten Kolben (404) in eine Betriebsposition verlagern, um die Treibmediumströmung (114) durch die Vielzahl von versetzten Strömungskanälen (204, 208, 212, 310, 314) zu verstärken, wobei sich die Geschwindigkeit des Motors (104) erhöht, wenn der zweite Kolben verschoben wird (404).

## Revendications

1. Un système comprenant :
une entrée de fluide (106) pouvant être connectée à une source de pression (116) pour fournir un fluide moteur (114) ;
un moteur entraîné par fluide (104) structuré pour être entraîné dans une direction d'entraînement à des vitesses variables à travers l'action du fluide moteur (114), le moteur entraîné par fluide (104) ayant une entrée (112) pour recevoir le fluide moteur (114) ; et
un ensemble de soupape (108) qui permet la libération sélective du fluide moteur (114) à partir de l'entrée de fluide (106) à l'entrée (112) du moteur entraîné par fluide (104), **caractérisé en ce que**
l'ensemble de soupape (108) comprend
une pluralité d'éléments d'étanchéité (302, 304) pour séparer l'entrée de fluide (106) de l'entrée (112) du moteur entraîné par fluide (104) et une pluralité de canaux de fluide (204, 208, 212, 310, 314) sélectivement découverte à travers le mouvement d'un premier piston (202) de telle sorte que le fluide moteur (114) puisse passer devant l'un des éléments d'étanchéité (302, 304) vers le moteur entraîné par fluide (104), le premier piston (202) étant déplaçable dans une plage de positions (502, 504) pour exposer sélectivement un ou plusieurs de la pluralité de canaux de fluide (204, 208, 212, 310, 314) pour porter le fluide moteur (114) et fournir un débit variable du fluide moteur (114) à travers l'ensemble de soupape (108) suite à la découverte des canaux de fluide (204, 208, 212, 310, 314), le débit variable du fluide moteur (114) fournissant une sortie à vitesse variable du moteur entraîné par fluide (104).

2. Le système selon la revendication 1, dans lequel le premier piston (202) est un premier piston coulissant, et qui comprend en outre un actionneur (110) structuré pour déplacer sélectivement le premier piston coulissant (202) d'une première position (502) vers une seconde position (504).

3. Le système selon la revendication 2, dans lequel le premier piston (202) comprend une formation formant la pluralité de canaux de fluide (204, 208, 212, 310, 314).

4. Le système selon la revendication 2, qui comprend en outre un second piston (404) sélectivement déplacé par l'actionneur (110), le second piston (404) étant structuré pour permettre un écoulement de fluide moteur (114) au moteur entraîné par fluide (104) en plus d'un écoulement de fluide moteur (114) par le premier piston coulissant (202).

5. Le système selon la revendication 4, dans lequel un écoulement de fluide reçu par le moteur entraîné par fluide (104) à partir du déplacement du second piston (404) dépasse un écoulement de fluide reçu par le moteur entraîné par fluide (104) à partir d'un déplacement maximal du premier piston (202), ou dans lequel la pluralité de canaux de fluide (204, 208, 212, 310, 314) sont des canaux de fluide s'étendant axialement (204, 208, 212, 310, 314), et dans lesquels chacun de la pluralité des canaux de fluide (204, 208, 212, 310, 314) s'étendant axialement étant décalés axialement par rapport à des canaux de fluide voisins (204, 208, 212, 310, 314) de sorte que la relation décalée assure une exposition sélective des canaux de fluide (204, 208, 212, 310, 314) lorsque le premier piston coulissant (202) est glissé entre une première position (502) et une seconde position (504).

6. Le système selon la revendication 5, dans lequel la pluralité de canaux de fluide comprend au moins trois canaux de fluide s'étendant axialement (204, 208, 212, 310, 314).

7. Le système selon la revendication 2, comprenant en outre un boîtier (102) qui définit au moins une partie d'un outil électrique entraîné par air (100), dans lequel le boîtier (102) comprend le moteur entraîné par fluide (104) et l'ensemble de soupape (108), et dans lequel un actionneur (110) utilisé pour modifier une position (502, 504) du premier piston (202) est un déclencheur.

8. Le système selon la revendication 1, qui comprend en outre un second piston (404) structuré pour fournir une zone de passage d'écoulement pour l'écoulement du fluide moteur (114) en plus d'un écoulement fourni par le premier piston (202), le second piston (404) étant actionné par le mouvement du premier piston (202).

9. Le système selon la revendication 1, dans lequel l'ensemble de soupape (108) est structuré pour être en communication de fluide avec une source de pressurisation de fluide (116), et dans lequel la source de pressurisation de fluide (116) est un compresseur d'air.

10. Un procédé comprenant :
fournir un fluide moteur (114) provenant d'une entrée de fluide (106) reliée à une source de pression (116) à un moteur entraîné par fluide (104) à travers un ensemble de soupape à vitesse variable (108). L'ensemble de soupape à vitesse variable (108) permettant une libération sélective du fluide moteur à partir de l'entrée de fluide (106) à une entrée (112) du moteur entraîné par fluide (104), l'ensemble de soupape à vitesse variable (108) ayant une pluralité d'éléments d'étanchéité (302, 304) pour séparer l'entrée de fluide (106) provenant de l'entrée (112) du moteur entraîné par fluide (104) et d'une pluralité de canaux d'écoulement décalés (204, 208, 212, 310, 314) sélectivement découverts par le déplacement d'un premier piston mobile (202), l'interaction de la pluralité d'éléments d'étanchéité (302, 304) et du premier piston mobile (202) formant des positions fermées de la pluralité de canaux d'écoulement décalés (204, 208, 212, 310, 314) et des positions ouvertes opérationnelles de la pluralité de canaux d'écoulement décalés (204, 208, 212, 310, 314), la fourniture comprenant :
le déplacement du premier piston (202) vers une première position opérationnellement ouverte pour exposer un premier de la pluralité de canaux d'écoulement décalés (204, 208, 212, 310, 314) de façon à permettre au fluide moteur (114) de s'écouler plus loin que l'un des éléments d'étanchéité (302, 304) et de traverser le premier de la pluralité de canaux d'écoulement décalés (204, 208, 212, 310, 314) ;
écouler le fluide moteur (114) à travers le premier de la pluralité de canaux d'écoulement décalés (204, 208, 212, 310, 314) pour fournir le fluide moteur (114) à un moteur entraîné par fluide (104) entraînant ainsi le moteur (104) à une première vitesse ;
déplacer le premier piston (202) dans une seconde position opérationnellement ouverte pour exposer un deuxième canal de la pluralité de canaux d'écoulement décalés (204, 208, 212, 310, 314) de façon à permettre au fluide moteur (114) de s'écouler plus loin que l'un des éléments d'étanchéité (302, 304) et de traverser le premier de la pluralité de canaux d'écoulement décalés et le second de la pluralité de canaux d'écoulement décalés ; et
écouler le fluide moteur (114) à travers le premier de la pluralité de canaux d'écoulement décalés (204, 208, 212, 310, 314) et le second de la pluralité de canaux d'écoulement décalés (204, 208, 212, 310, 314) pour fournir le fluide moteur (114) au moteur entraîné par fluide (104), entraînant ainsi le moteur (104) à une seconde vitesse supérieure à la première vitesse.

11. Le procédé selon la revendication 10, comprenant en outre le déplacement du premier piston (202) vers une pluralité de positions opérationnelles, chaque position opérationnelle correspondant à une position à laquelle un autre des canaux d'écoulement décalés (204, 208, 212, 310, 314) permet au fluide moteur (114) de s'écouler vers le moteur entraîné par fluide (104), dans lequel, lorsque le nombre de canaux d'écoulement décalés (204, 208, 212, 310, 314) que le fluide moteur (114) traverse est augmenté, la vitesse du moteur (104) augmente également ou comprend en outre la rotation d'un flux de fluide moteur (114) à l'intérieur d'un boîtier (102) d'un outil (100) comprenant le moteur entraîné par fluide (104) d'une première direction d'entrée à une seconde direction à utiliser dans l'ensemble de soupape (108), la première direction d'entrée étant approximativement perpendiculaire à la seconde direction.

12. Le procédé selon la revendication 11, qui comprend en outre le déplacement du premier piston (202) vers une position opérationnelle telle que la totalité de la pluralité de canaux d'écoulement décalés (204, 208, 212, 310, 314) est utilisée pour faire couler le fluide moteur (114) et déplacer un second piston (404) dans une position opérationnelle pour augmenter l'écoulement du fluide moteur (114) à travers la pluralité de canaux d'écoulement décalés (204, 208, 212, 310, 314), dans lequel lors du déplacement du second piston (404) la vitesse du moteur (104) est augmentée.
